# EUROPEAN PATENT SPECIFICATION

(11) **EP 2 509 802 B1**
(45) Date of publication and mention of the grant of the patent: **04.05.2016**
(21) Application number: 10816375.9
(22) Date of filing: 10.12.2010
(51) Int. Cl.: B60C 9/20, B60C 9/22, B60C 9/00, D07B 1/06

(54) **TIRE FOR A HEAVY DUTY VEHICLE**
REIFEN FÜR EIN RAD EINES SCHWERLASTFAHRZEUGS
PNEU POUR ROUE D'UN VÉHICULE DE TRANSPORT DE CHARGE LOURDE

(30) Priority: 11.12.2009 IT MI20092175; 02.02.2010 US 300619 P
(43) Date of publication of application: 17.10.2012
(73) Proprietor: Pirelli Tyre S.p.A., 20126 Milano (IT)
(72) Inventor: DAGHINI, Guido Luigi, I-20126 Milan (IT); CEREDA, Giuseppe, I-20126 Milan (IT)
(74) Representative: Colombo, Stefano Paolo
(86) International application number: PCT/IB2010/055739
(87) International publication number: WO 2011/070542

(56) References cited:
- EP-A2- 1 813 444
- EP-B1- 0 991 531
- EP-B1- 1 280 958
- WO-A1-2005/016666
- WO-A1-2008/141978
- GB-A- 1 466 114
- JP-A- 2001 020 188
- US-A- 5 662 752
- US-B2- 6 817 395

## Description

### FIELD OF THE INVENTION

The present invention relates to a tyre for a wheel of a heavy load vehicle, such as a lorry, bus or trailer and more generally for vehicles in which the tyre is subjected to a high load. The present invention relates particularly to such a tyre comprising at least one reinforcing strip with improved reinforcing elements.

### PRIOR ART

As a rule, a tyre typically comprises a carcass structure having lateral edges which are respectively associated to bead structures, each bead structure typically comprising at least one bead core and at least one bead filler.

In a radially outer position relative to the carcass structure there is an associated belt structure comprising one or more belt layers.

A tread band is applied in a radially outer position relative to the belt structure.

The belt structure, in a tyre for a wheel of a heavy load vehicle, may comprise at least one lateral reinforcing strip incorporating a plurality of reinforcing elements, preferably metal cords. These reinforcing elements are laid substantially in the circumferential direction, forming an angle of a few degrees (less than 5°) relative to a plane parallel to the equatorial plane of the tyre. The reinforcing elements of the reinforcing strip are typically coated with a vulcanized elastomeric material.

Additionally, the belt structure of a tyre for a wheel of a heavy load vehicle may comprise an additional belt layer. This additional belt layer, also known as a "stone protecting belt", is the radially outermost layer of the belt structure, and acts as a protective layer against the penetration of stones and/or debris towards the inner layers of the tyre structure.

Sidewalls are also applied to the lateral surfaces of the carcass structure, each surface extending from one of the lateral edges of the tread band as far as its respective bead structure.

JP 11-21774 describes a metal cord comprising a core strand and six outer strands arranged around the core strand, giving a total of seven strands. Each strand comprises a core filament and six outer filaments arranged around the core filament. According to JP 11-21774, the diameter dc of the core filament of the core strand and the diameter ds of the outer filaments of the core strand are in the relation 1.0<dc/ds≤1.10.

US 5,461,850 comprises a cord that includes a core strand and up to nine peripheral strands surrounding the core strand. The core strand has a diameter D1 and the peripheral strands have a diameter D2. According to US 5,461,850, the ratio of the diameter of the core strand to the diameter of the peripheral strands is greater than a predetermined value in such a way as to allow the rubber to penetrate.

JP 2001 020188 A and US 6,817,395 B2 disclose other metal cords. EP 1 813 444 A2 discloses a tyre for a wheel of a heavy load vehicle.

WO 2005/016666 A1 discloses a tyre for heavy vehicles corresponding with the preamble of claim 1.

EP 1 280 958 discloses a zinc-coated steel cord with improved fatigue resistance.

EP 0 991 531 B1 discloses an armature de sommet pour pneumatique radial.

US 5,662,752 discloses pneumatic tyres with centrally protruding inclined belt layer.

WO 2008/141978 A1 discloses a tyre for heavy-goods vehicles.

### SUMMARY OF THE INVENTION

A tyre for a wheel of a heavy load vehicle, such as a lorry, bus, trailer or the like is typically subjected to very severe conditions of use: such a tyre may be used in difficult environments (meaning for example with relatively low or relatively high temperatures, in contact with dusty or muddy surfaces or surfaces with various sorts of projecting asperities) and must therefore have very elevated characteristics of resistance. It is also desirable that the structure of a tyre of this type should have elevated resistance characteristics partly because they will then enable it to be retreaded. Retreading a tyre, as is known, consists essentially in removing a worn tread band and applying a new tread band. To be able to retread a tyre, therefore, the tyre's structure, meaning the carcass structure and belt structure, must be essentially intact and must not show any weakness.

Often, the integrity of a tyre structure for a wheel of a heavy load vehicle is compromised by corrosion phenomena on the metal reinforcing elements. Corrosion phenomena are particularly prone to occur in the metal elements which reinforce the radially outermost belt layers.

If said metal reinforcing elements are found to be corroded on visual or other inspection, the tyre cannot be retreaded and the carcass must be disposed of.

The Applicant has addressed the problem of the corrosion of the metal reinforcing elements, which are typically in the form of metal cords, in tyres, especially in tyres for the wheels of heavy load vehicles.

The Applicant has observed that a tyre for a wheel of a heavy load vehicle, comprising layers of lateral reinforcements with cords laid substantially in the circumferential direction, can be particularly prone to corrosion phenomena.

The Applicant believes that this greater exposure to corrosion phenomena is due to the not infrequent event whereby water or other oxidizing agent reaches the aforementioned cords laid substantially circumferentially through a tear caused by a pointed and/or cutting object such a nail, stone or similar object.

The Applicant believes in particular that if a tear is produced which allows water (or more generally an oxidizing agent) to reach the metal cords, the water may not only corrode the cords at the tear location but could travel circumferentially along and damage a not insignificant length of the cords. In extreme cases a tear at a cord could eventually result in damage, over time, to the entire affected cord. Alternatively or in addition to the damage of the cords by corrosion, the bond between the cords and the elastomeric material in the reinforcing layer or layers could deteriorate.

Because of cord damage, in extreme cases the tyre could fail. In less extreme cases the tyre could be impossible to retread owing to corrosion of the cords and/or the deterioration of the bond between the cords and the elastomeric material. It should therefore be discarded by the rebuilders because its long-term integrity and reliability cannot be guaranteed.

The Applicant has addressed the problem of overcoming these disadvantages and has addressed the problem of ensuring that local damage cannot have effects on an extended length of the metal cords.

The Applicant has found that this problem can be solved by providing a belt layer reinforced with high-elongation metal cords with twisted strands, each strand comprising a central filament and outer filaments arranged to form a single circular outer ring around the central filament, wherein, advantageously, the central filament has a diameter greater than the diameter of the outer filaments.

The expression "high-elongation metal cord" means a cord that:
a. has an elongation at break of at least 3.5%; and, preferably,
b. has a part load elongation of between 1% and 3%. "Part load elongation" means the difference between the percentage elongation obtained when the cord is subjected to a tensile force of 50 N and the percentage elongation obtained when the cord is subjected to a tensile force of 2.5 N.

Characteristic "a" above (high elongation at break) is calculated by the BISFA E6 method (The International Bureau for the Standardization of Man-Made Fibres, Internationally Agreed Methods for Testing Steel Tyre Cords, 1995 edition). Characteristic "b" above (high part load elongation %) is calculated by the BISFA E7 method (The International Bureau for the Standardization of Man-Made Fibres, Internationally Agreed Methods for Testing Steel Tyre Cords, 1995 edition).

The Applicant has found that this solution does not significantly increase the low penetrability of the rubber in the high elongation cord. In spite of this, surprisingly, the Applicant has observed significant improvements both in terms of reduced oxidation of the cords and reduced deterioration of the bond between the cords and the elastomeric material. The Applicant believes that this is due to the formation of small discontinuous and non-uniform channels and/or gaps between one outer filament and another, in which a small amount of elastomeric material penetrates. According to the Applicant, the alternation of these channels and/or gaps, filled with elastomeric material, leads in practice to the formation of "plugs" of elastomeric material. These discontinuous plugs, occurring substantially at random along the cords within the circumferential reinforcing strip, oppose and/or interrupt the path in the circumferential direction of water (or more generally of oxidizing agent) which may penetrate as far as the cord. As a result, the oxidizing agent is unable to attack and corrode the entire length of the cord, and/or the bond between the cord and the elastomeric material. The present invention relates to a tyre for a wheel of a heavy load vehicle, according to claim 1.

The invention provides a high-elongation metal cord comprising a plurality of twisted strands. Each strand comprises a central filament and a plurality of outer filaments arranged to form a single circular outer ring around the central filament. The central filament has a diameter greater than the diameter of the outer filaments.

The present invention, in one or more of the aforementioned aspects, may include one or more of the preferred features described below.

In certain embodiments, the metal cord comprises two or three strands.

According to some embodiments, the metal cord comprises a number of outer filaments which is between five and six.

Preferably, the diameter of the central filament of the metal cord is greater than the diameter of the plurality of outer filaments by a percentage not greater than 25%. According to some embodiments, the diameter of the central filament is greater than the diameter of the plurality of outer filaments by a percentage between about 5% and about 7% of the diameter of the outer filaments.

The belt structure comprises at least two radially superposed main belt layers incorporating a plurality of reinforcing elements that are substantially parallel to each other. In each layer, the reinforcing elements are preferably inclined with respect to the circumferential direction of the tyre and are oriented in such a way as to intersect each other with respect to the reinforcing elements of the adjacent layer.

The reinforcing strip may is arranged in a position radially external to the at least two main belt layers.

The reinforcing strip is arranged at a respective axially outer end of the radially outermost layer of said at least two main belt layers.

The reinforcing strip may be made as a plurality of axially adjacent windings of an elongate element comprising at least one of said reinforcing elements.

The elongate element may comprise from one to five of said reinforcing elements.

Alternatively, the reinforcing strip may be made as a plurality of radially superposed windings of a rubber-coated band comprising a plurality of said reinforcing elements.

An additional reinforcing strip may be applied between said at least two main belt layers. In one embodiment, this additional reinforcing strip may be laid in an axially outward position between said at least two main belt layers.

An additional reinforcing strip may be applied between said at least one carcass ply and the radially innermost belt layer. In one embodiment, this additional reinforcing strip may be laid in an axially outward position between said at least one carcass ply and the radially innermost belt layer between said at least two main belt layers.

Advantageously, the present invention improves the capability to be retreaded of a tyre because the percentage of tyres discarded when they do not pass the inspections when the tyre comes to be retreaded is greatly reduced.

Other features and advantages of the invention will become clearer in the course of the following description of certain preferred embodiments thereof. The description given below is for non-restrictive illustration and is to be read with reference to the accompanying figures, in which:
- Figures 1a and 1b are cross sections through tyres in accordance with embodiments of the present invention;
- Figures 2a, 2b and 2c are schematic cross sections through a strip of elastomeric material with reinforcing elements to produce a lateral reinforcing strip for the belt structure of the tyre seen in Figure 1a;
- Figures 3a and 3b are schematic cross sections through a band of elastomeric material with reinforcing elements to produce a lateral reinforcing strip for the belt structure of the tyre seen in Figure 1 b;
- Figure 4 is a schematic cross section through a reinforcing element for a belt structure in one embodiment of the invention;
- Figure 5 is a force/elongation graph of three different reinforcing elements, one being known and two being in accordance with embodiments of the invention; and
- Figure 6 is an enlarged portion of the force/elongation graph seen in Figure 5.

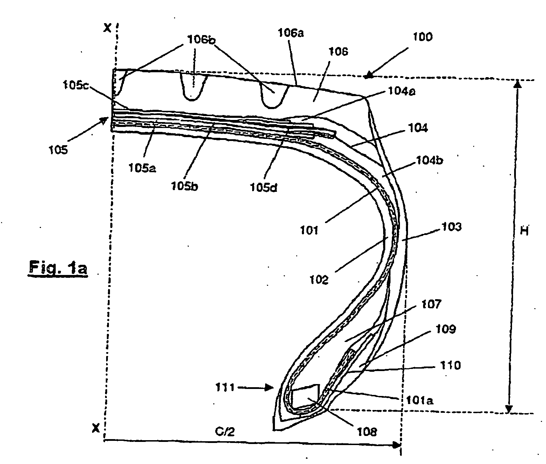

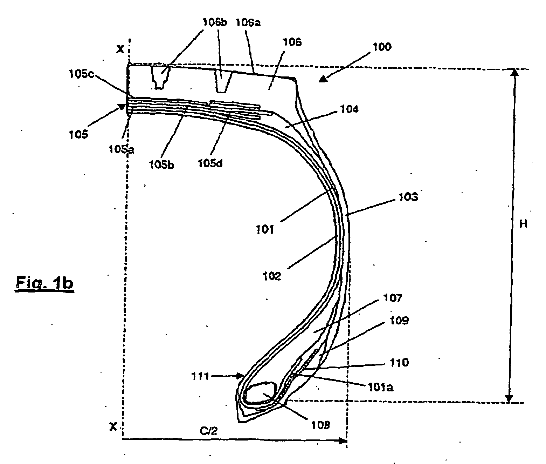

For simplicity, Figures 1 a and 1 b show only part of the tyre 100, the remaining part, which is not shown, being substantially identical and symmetrical about the equatorial plane X-X of the tyre. In the various figures, identical reference numbers denote identical or functionally equivalent parts.

The tyre of Figures 1 a and 1 b is a tyre for a wheel of a heavy load vehicle, such as a lorry, bus or trailer and more generally for vehicles in which the tyre is subjected to a high load. Such a tyre is preferably suitable for mounting on wheel rims with a diameter of greater than 16", typically having a diameter greater than or equal to 17.5".

In the present description and in the claims that follow, the expression "equatorial plane" is used to mean the plane perpendicular to the axis of rotation of the tyre, containing its centre line.

The tyre 100 comprises at least one carcass ply 101 whose opposing lateral edges are provided with respective bead structures 111 comprising a bead core 108 and at least one bead filler 107. Said at least one carcass ply 101 is associated to said bead structure 111 typically by turning the opposing lateral edges of said at least one carcass ply 101 up around said bead core 108 and around said at least one bead filler 107 in such a way as to form a carcass turn-up.

The at least one carcass ply 101 usually comprises a plurality of reinforcing elements arranged parallel to each other and at least partially coated with a layer of crosslinked elastomeric material. These reinforcing elements, especially in the case of lorry tyres, are usually made of steel cords. Textile fibres such as rayon, nylon, polyester or polyethyleneterephthalate or mixtures of these can be used for certain types of tyre (such as light truck tyres).

The at least one carcass ply 101 is usually of radial type, i.e. incorporates reinforcing elements arranged substantially at right angles to the circumferential direction.

A belt structure 105 is applied in a radially outer position relative to said at least one carcass ply 101. The belt structure 105 typically comprises two main belt layers 105a and 105b which are radially superposed and incorporate a plurality of reinforcing elements, which are typically metal cords. Said reinforcing elements are parallel to each other in each layer and intersect with respect to the reinforcing elements of the adjacent layer, and are inclined preferably symmetrically with respect to the circumferential direction of the tyre, at an angle of between 10° and 70°, preferably between 12° and 40°. The reinforcing elements are typically covered with a crosslinked elastomeric material.

Said reinforcing elements preferably have a density of between 30 cords/dm and 80 cords/dm, preferably between 40 cords/dm and 65 cords/dm, measured on said two main belt layers 105a and 105b, in a circumferential direction, close to the equatorial plane X-X of the tyre 100.

Furthermore, the belt structure 105 may also comprise a third belt layer 105c applied as a radially outermost layer of the belt structure 105 and having reinforcing elements which are typically metal cords. Said reinforcing elements are laid parallel to each other and are inclined with respect to a circumferential direction of the tyre at an angle of between 10° and 60°, preferably between 12° and 40°. The reinforcing elements are typically coated with a crosslinked elastomeric material. Said third reinforcing layer 105c acts as a protective layer against the penetration of stones and/or debris that may become trapped in the tread grooves (106b) and damage the inner belt layers or even the carcass ply 101.

Said reinforcing elements of the third belt layer 105c preferably have a density of between 30 cords/dm and 80 cords/dm, preferably between 35 cords/dm and 65 cords/dm, measured on said third belt layer 105c in a circumferential direction, close to the equatorial plane X-X of the tyre 100.

The belt structure 105 of the tyre 100 advantageously also includes a reinforcing layer 105d at zero-degrees applied in a radially outer position relative to the second main belt strip 105b. This layer 105d may be about the same width as the main belt strips. Typically, however, this layer 105d is made with strips of limited width placed at the axial edges of the belt 105.

In the embodiments shown in Figures 1 a and 1b, the layer 105d comprises a lateral reinforcing strip 105d called the "zero-degree reinforcing strip". This lateral reinforcing strip 105d is placed at the axial end of the tyre and is applied in a radially outer position relative to the second main belt strip 105b. Said reinforcing strip 105d usually incorporates a plurality of reinforcing elements, which are typically metal cords. Unlike the other layers of the belt structure, the reinforcing elements of the zero-degree reinforcing strip are oriented in a substantially circumferential direction, thus forming an angle of a few degrees (e.g. an angle of between 0° and 5°) to the equatorial plane X-X of the tyre, and are coated with a crosslinked elastomeric material.

More particularly, in the embodiment shown in Figure 1a, the zero-degree reinforcing strip 105d is made by winding in a spiral an elongate rubber-coated element, such as a rubber-coated ribbon (which is narrower than the strip itself) around the second main belt layer 105b, in an axially outer portion thereof. The elongate element comprises a number of reinforcing elements, e.g. from one to five metal cords. The elongate element has a longitudinal axis and the reinforcing elements are laid substantially parallel to this longitudinal axis. In this embodiment a plurality of windings of rubber-coated ribbon, laid axially adjacent to each other, forms the zero-degree strip 105d.

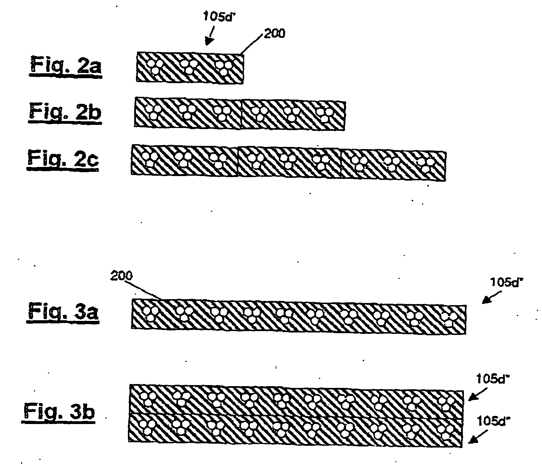

Figures 2a, 2b and 2c are cross sections showing schematically a first winding of the rubber-coated ribbon 105d' (Figure 1 a), two windings of rubber-coated ribbon (Figure 2b) and three windings of rubber-coated ribbon (Figure 2c), axially adjacent to each other. The rubber-coated ribbon in Figures 2a, 2b and 2c comprises three metal cords 200.

According to some embodiments, the metal cords 200 are laid in the reinforcing strip 105d with a density of between 30 and 65 cords/dm. According to some embodiments, the width of a rubber-coated ribbon 105d' is between around 1 mm and around 10 mm. Typically, the width of the zero-degree reinforcing strip 105d is between around 12.0 mm and around 60.0 mm. According to some embodiments, the thickness of a rubber-coated ribbon 105d' (and hence of the zero-degree reinforcing strip 105d) is between around 1.5 mm and around 3.0 mm.

As an alternative, in the embodiment shown in Figure 1b the zero-degree reinforcing strip 105d is made by radially superposing two or three windings of a rubber-coated band of predetermined width. The rubber-coated band with which the zero-degree reinforcing strip 105d is formed in the embodiment shown in Figure 1b is about the same width as the strip 105d itself. Figures 3a and 3b show an embodiment of a rubber-coated band 105d" suitable for forming a reinforcing strip 105d as in Figure 1b. The rubber-coated band 105d" comprises a number of reinforcing elements, which are typically metal cords. There are typically from nine (as shown in Figure 3a) to twenty-two reinforcing elements in the rubber-coated band 105d". They are laid substantially parallel to each other. The rubber-coated band has a longitudinal axis and the reinforcing elements are laid substantially parallel to this longitudinal axis. The width of a rubber-coated band varies depending on the number of reinforcing elements. Typically, the width of the rubber-coated band (and hence of the zero-degree reinforcing strip 105d) is from about 12.0 mm to about 60.0 mm. According to some embodiments, the metal cords are laid in the rubber-coated band at a density of between 30 and 65 cords/dm. According to some embodiments, the thickness of the rubber-coated band is from about 1.5 mm to about 3.0 mm.

In much the same way as in Figures 2a-2c, Figures 3a, 3b show schematically, in cross section, a first turn of rubber-coated band 105d" and a second turn of rubber-coated band (superposed on the first turn).

In addition to the reinforcing strip 105d applied in a radially outer position relative to the second main belt strip 105b, there may also be an additional zero-degree reinforcing layer (e.g. a strip laid in an axially outer position) between the main belts 105a, 105b and/or a zero-degree reinforcing layer (e.g. a strip laid in an axially outer position) between the carcass 101 of the tyre and the radially innermost main belt 105a. These embodiments are not shown in the figures.

In the embodiment shown in Figures 1a and 1b, an insert 104 comprising a crosslinked elastomeric material is arranged in the area where the lateral edges of the tread band 106 connect to the sidewall 103. The insert 104 is usually inserted between the carcass ply 101, the belt structure 105, the tread band 106 and the sidewall 103.

More specifically, the insert 104 comprises an axially inner part 104a which is inserted between the belt structure 105 and the tread band 106 and is tapered towards the equatorial plane X-X, and an axially outer part 104b inserted between the carcass ply 101 and the corresponding sidewall 103, and is tapered towards the axis of rotation of the tyre.

A tread band 106, whose lateral edges are connected to the sidewall 103, is applied circumferentially in a radially outer position relative to said belt structure 105. Externally, the tread band 106 has a rolling surface 106a designed to make contact with the ground. Circumferential grooves 106b which may be connected by transverse cuts (not shown in Figures 1 a and 1 b) define a tread design that comprises a plurality of ribs and/or blocks of various shapes and sizes distributed around the rolling surface 106a.

A sidewall 103 is applied to the outside of the carcass ply 101. The sidewall 103 extends in an axially outward position, from the bead structure 111 to the tread band 106.

In the embodiments shown in Figures 1 a and 1 b, a layer of rubber 102, generally known as the inner liner, which provides the necessary impermeability to the inflation air of the tyre, is provided in a radially inner position relative to the carcass ply 101.

The tyre 100 according to the present invention preferably has an aspect ratio (H/C) of between 0.35 and 1.1, more preferably between 0.45 and 1.0.

Said aspect ratio is the ratio of the height H of the cross section of the tyre, that is the radial distance from the nominal diameter of the wheel to the outside diameter of the tyre at its equatorial plane, to the width C (in Figures 1a and 1b the measurement given is C/2, i.e. half of C) of the cross section of the tyre, that is the maximum linear distance parallel to the axis of rotation of the tyre between the outer surfaces of the sidewalls (these dimensions are determined according to E.T.R.T.O., 2009 edition, pp. G3 and G4).

According to some embodiments of the present invention, the zero-degree reinforcing strip (or layer) 105d comprises high-elongation metal cords. These cords comprise a certain number of strands 201 twisted together.

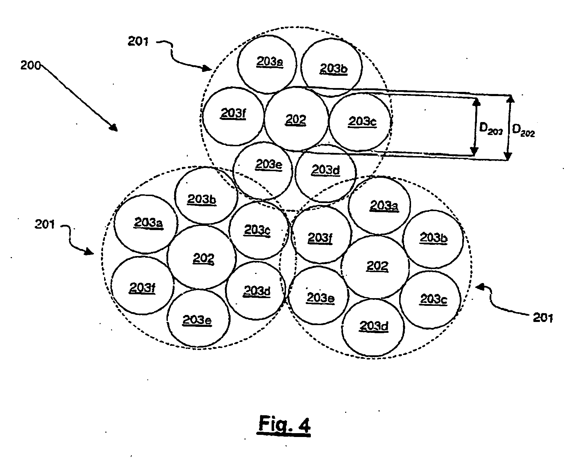

There may be two, three, four, five or more strands 201. In one embodiment each metal cord 200 comprises three strands 201 twisted together in a closed helical winding, such as an "S" winding direction (in other words clockwise). An example of strands 201 arranged in this embodiment is shown schematically in cross section in Figure 4.

Each strand 201 comprises a central filament 202 and a certain number of outer filaments 203a, 203b, ...., 203f. In this description the individual outer filaments 203a, 203b, ...., 203f are indicated together by the reference number 203. The outer filaments 203 are arranged substantially in such a way as to form a single ring arranged in a circular annulus around said central filament 202. There may be five, six or more outer filaments 203. In a preferred embodiment there are six. The filaments 202, 203 are twisted together to form the strand 201 using a closed helical winding, such as an "S" winding direction.

Figure 4 shows schematically a cross section through a metal cord 200 in an embodiment of the invention with three strands 201 twisted together and in which each strand comprises a central filament 202 and six outer filaments 203.

As can be seen in Figure 4, the central filament 202 has a diameter D₂₀₂ greater than the diameter D₂₀₃ of the outer filaments 203.

The diameter D₂₀₂ of the central filament 202 is greater than the diameter D₂₀₃ of the outer filaments 203 by a percentage preferably not greater than 25%. More preferably the diameter D₂₀₂ of the central filament 202 is greater than the diameter D₂₀₃ of the outer filaments 203 by a percentage not greater than 20%. As an example, the diameter D₂₀₂ of the central filament 202 is about 5-7% greater than the diameter D₂₀₃ of the outer filaments 203.

According to some embodiments of the present invention, each strand 201 has the same characteristics in terms of number of filaments, the arrangement of the filaments and the diameter of the filaments. According to some embodiments of the present invention, each strand 201 also has the same characteristics in terms of twist pitch of the filaments and the material of the filaments.

In preferred embodiments the filaments 202, 203 of the strands 201 are twisted together in a closed helical winding (e.g. wound in the "S" direction). The twist pitch of the filaments 202, 203 is preferably between about 2.0 mm and about 10.0 mm.

In preferred embodiments, the strands 201 meanwhile are twisted together in a closed helical winding (e.g. wound in the "S" direction). The twist pitch of the strands 201 is preferably between about 3.0 mm and about 10.0 mm.

The diameter of the filaments is preferably between 0.175 mm and 0.380 mm.

As mentioned above, the filaments are preferably filaments of NT (normal tensile), HT (high tensile), SHT (super-high tensile) or UHT (ultra-high tensile) steel. They are typically coated with brass or other corrosion-resistant coating (such as Zn/Mn). In one embodiment the central filament and the outer filaments are of the same material and are treated in the same way against corrosion. In other advantageous embodiments the central filament is a steel with greater tensile strength characteristics (such as HT) than the outer filaments (such as NT) and/or has undergone an enhanced corrosion-resistance treatment. This enhanced corrosion-resistance treatment may advantageously be, for example, a thicker brass coating. Alternatively, the central filament may be coated with Zn/Mn and the outer filaments may instead be brass-coated.

As observed earlier, the Applicant has observed that the provision, in the strands that make up the cord, of central filaments whose diameter is greater than that of the outer filaments makes significant improvements possible, both in terms of reduced oxidation of the cords and reduced deterioration of the bond between the cords and the elastomeric material. The Applicant believes that this is due to the formation of small discontinuous and non-uniform channels and/or gaps between one outer filament and the next, into which a small amount of elastomeric material penetrates. In the Applicant's view, the alternation of these channels and/or gaps, filled with elastomeric material, results in practice in the formation of "plugs" of elastomeric material. These discontinuous plugs, occurring more or less at random along the cords in the circumferential reinforcing strip 105d oppose and/or interrupt the path in the circumferential direction of the water (or more generally of the oxidizing agent) which may get in as far as the cord. In this way the oxidizing agent is prevented from attacking by corrosion the entire length of the cord, and/or the bond between the cords and the elastomeric material.

This result is particularly surprising in view of the fact that the low penetrability to the rubber of the high-elongation cord used in the reinforcing strip 105d is not significantly increased. In fact the high-elongation cord with the central filaments of the larger-diameter strands appears still to allow very little penetration to the rubber: as will be shown in a number of examples, the increase in penetrability to the rubber is of a few percentage points.

In preferred embodiments the semifinished product (typically a rubber-coated band or rubber-coated ribbon with metal cords) to form a zero-degree reinforcing strip is produced by extrusion. In the extrusion process, one or more cords are introduced into an apparatus comprising an extruder. A high-viscosity green compound is introduced into the extruder and meets the cord(s). The unfinished product then emerges from the extruder and is typically wound onto a coil.

The results of tests carried out on two examples (Examples 1 and 4) of a cord of known type used as a comparison and three examples (Examples 2, 3 and 5) of cords used in embodiments of the present invention are given below.

### EXAMPLES

### Example 1 (comparison): Metal cord A "3X7X0.20 HE"

- No. of strands: 3
- No. of filaments per strand: 1+6 (central filament + 6 outer filaments)
- Diameter of central filament: 0.200 mm
- Diameter of outer filaments: 0.200 mm
- Twist pitch of filaments: 3.9mm
- Twist pitch of strands: 6.3 mm
- Twist direction: SS
- Diameter of metal cord: 1.39 mm
- Cord weight: 5.84 g/m
- Part Load Elongation: 2.04%
- Breaking Load: 1570 N
- Elongation at break: 5.50%

### Example 2 (invention): Metal cord B "3X(1X0.225+6X0.20)HE"

- No. of strands: 3
- No. of filaments per strand: 1+6 (central filament + 6 outer filaments)
- Diameter of central filament: 0.225 mm
- Diameter of outer filaments: 0.200 mm
- Twist pitch of filaments: 3.9 mm
- Twist pitch of strands: 6.3 mm
- Twist direction: SS
- Diameter of metal cord: 1.42 mm
- Cord weight: 6.06 g/m
- Part Load Elongation: 2.07%
- Breaking Load: 1638 N
- Elongation at break: 5.52%

### Example 3 (invention): Metal cord C "3X(1X0.235+6XO.20)HE"

- No. of strands: 3
- No. of filaments per strand: 1+6 (central filament + 6 outer filaments)
- Diameter of central filament: 0.235 mm
- Diameter of outer filaments: 0.200 mm
- Twist pitch of filaments: 3.9 mm
- Twist pitch of strands: 6.3 mm
- Twist direction: SS
- Diameter of metal cord: 1.44 mm
- Cord weight: 6.17 g/m
- Part Load Elongation: 2.05%
- Breaking Load: 1630 N
- Elongation at break: 5.82%

### Example 4 (comparison): Metal cord D "3X7X0.22 HE"

- No. of strands: 3
- No. of filaments per strand: 1+6 (central filament + 6 outer filaments)
- Diameter of central filament: 0.220 mm
- Diameter of outer filaments: 0.220 mm
- Twist pitch of filaments: 3.90 mm
- Twist pitch of strands: 6.30 mm
- Twist direction: SS
- Diameter of metal cord: 1.51 mm
- Cord weight: 7.10 g/m
- Part Load Elongation: 1.98%
- Breaking Load: 1840 N
- Elongation at break: 6.8%

### Example 5 (invention): Metal cord E "3X(1X0.250+6X0.22) HE"

- No. of strands: 3
- No. of filaments per strand: 1+6 (central filament + 6 outer filaments)
- Diameter of central filament: 0.250 mm
- Diameter of outer filaments: 0.220 mm
- Twist pitch of filaments: 4.0 mm
- Twist pitch of strands: 7.0 mm
- Twist direction: SS
- Diameter of metal cord: 1.58 mm
- Cord weight: 7.34 g/m
- Pat Load Elongation: 1.85%
- Breaking Load: 1930 N
- Elongation at break: 6.50%

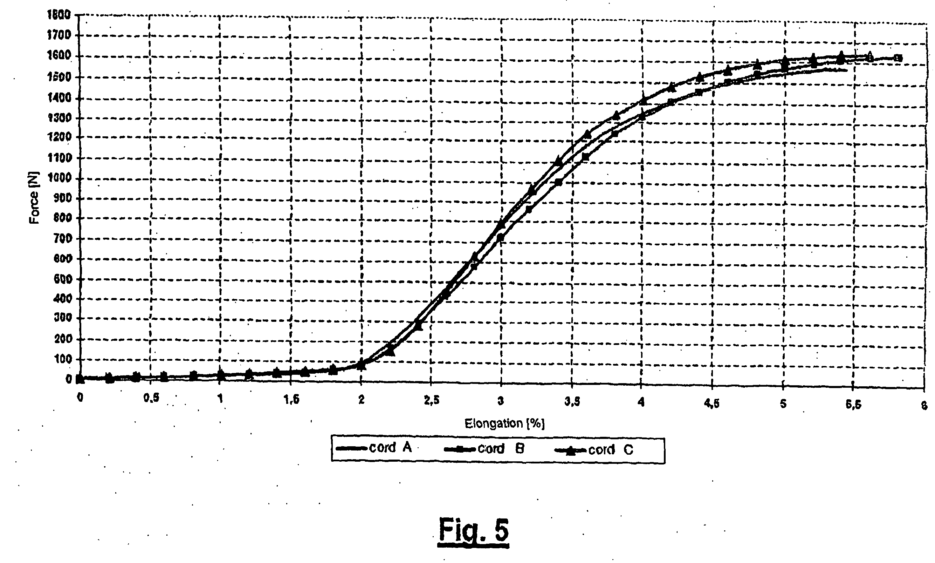

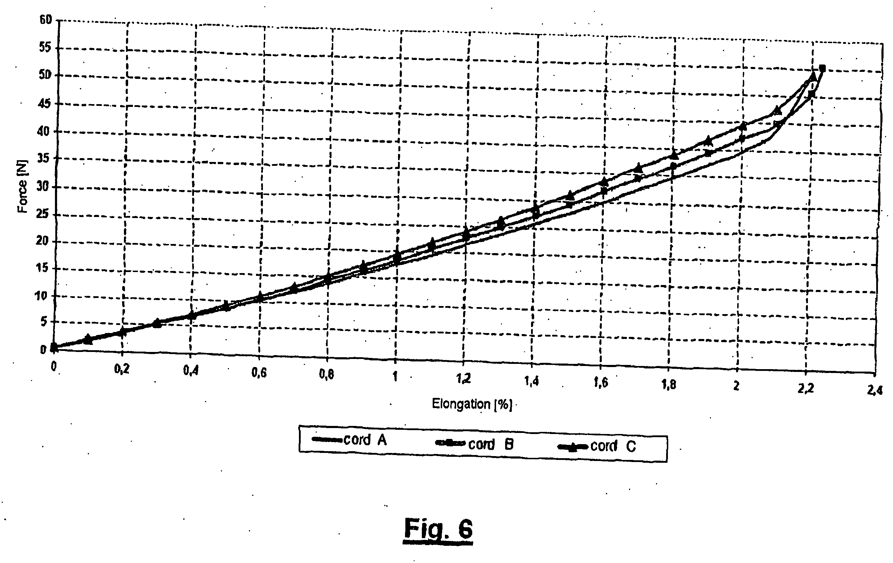

Cords A and D are metal cords of known type used as comparison cords. Cords B, C and E are metal cords to be used in tyres in embodiments of the invention. As will be seen from the data recorded above, all the cords have characteristics of diameter, weight, elongation at break, breaking load and part load elongation that are substantially equivalent, with very small and insignificant differences in the point values. This is also confirmed by examination of the load/elongation graphs in Figures 5 and 6.

Figure 5 is a graph of elongation [%] (x axis) against tensile force (y axis) expressed in Newtons [N]. Figure 6 shows, on a different scale, the part of the graph of Figure 5 up to about 50 N of tensile force. The graph in Figure 6 therefore represents the behaviour of a metal cord subjected to low tensile loads, assessed by the BISFA E7 method referred to earlier.

In particular, Figures 5 and 6 show the behaviour of cords A, B and C.

Cords A, B and C have substantially equivalent behaviour both at low loads and at break. Therefore, when these cords are used to form a zero-degree reinforcing strip for a tyre, the characteristics of the tyre remain practically unchanged and there is no need to re-engineer the tyre.

The Applicant extruded laboratory samples of type AA, type BB and type CC, with metal cords of types A, B and C, respectively. The Applicant then compared the characteristics of adhesion to the green compound and penetrability of the cured material, as shown in Table 1.

**Table 1**

| | Laboratory sample AA | Laboratory sample BB | Laboratory sample CC |
|---|---|---|---|
| Adhesion to the uncured material | 100 | 107 | 111 |
| Penetrability of the cured material | 100 | 104 | 104 |

Laboratory samples BB and CC show greater bonding with the uncured elastomeric material. In particular, sample CC has 10% better bonding with the uncured material than sample AA (with known metal cords). Bonding to the uncured material was evaluated by measuring the force necessary to extract the metal cords from the elastomeric material. Greater force was necessary to extract the metal cords BB and CC than cord AA.

Samples BB and CC also show only slightly higher penetrability of the cured elastomeric material than the low penetrability of the comparison sample AA. The test for penetrability of the cured material was done by immersing a length of product in alcohol and measuring the air, trapped inside the product, which escapes. Based on the results of the tests, 4% less air came out when the semifinished product of types BB or CC were immersed than from the semifinished product of type AA.

The results obtained in terms of better adhesion to the uncured material (despite a slight increase in the penetrability to the rubber) are, according to the Applicant, precursors of a better corrosion resistance of cords B and C. The Applicant believes that the improvement in the adhesion of the cords to the uncured material is due to the formation of small channels between one outer filament and the next. The rubber penetrates these channels. From careful visual examinations at cross sections through the samples of semifinished product, the Applicant has found that the channels between one outer filament and the next are not continuous and uniform. In other words, referring to Figure 4, the space between (for example) outer filament 203b and outer filament 203c varies, apparently quite randomly, between zero and a maximum value. The minimum value (zero) is when two filaments 203b, 203c touch, while the maximum value is when all the filaments except filaments 203b and 203c touch. This alternation of channels of variable widths filled with elastomeric material leads to the formation of rubber plugs. These discontinuous plugs prevent any water (or more generally oxidizing agent), that penetrates the tyre as far as the central filament of a cord in the reinforcing strip 105d, from corroding the entire length of the cord. There will at most be corrosion and damage to a circumferential portion of this central filament, until the oxidizing agent meets a new barrier in the form of a channel filled with rubber acting as a plug.

The channels or gaps between the outer filaments occur because the six outer filaments do not completely surround the external circumference of the central filament. This is because the diameter of the outer filaments is less than the diameter of the central filament. The gaps are seen to be discontinuous because when the filaments are twisted together they move with respect to each other in a substantially random fashion. The result is the creation of gaps of larger or smaller dimensions when examined all the way along the length of the cord. In turn, these gaps allow greater penetration of the rubber, including towards the central filament 202.

In addition to the tests, performed on laboratory samples as specified above, of penetrability of the cured elastomeric material, and adhesion to the uncured material, the Applicant also performed an indoor test of resistance to propagation of oxidation on a finished tyre. In particular, the Applicant performed the same test of resistance to propagation of oxidation on a tyre in accordance with an embodiment of the present invention, with cords of type C, and on a known comparison tyre, with cords of type A. Both tyres had the Figure 1a structure.

The test was performed by making a hole in the tyre from the inside as far as the cords of the reinforcing strip 105d. The tyre was mounted on a wheel and inflated to its nominal pressure. Before inflation, a certain amount of salt water was introduced into the tyre. The tyre was then subjected to a predetermined vertical load and rotated for many hours.

At the end of the test, the propagation of the oxidation from the hole (the point where the salt water had been able to penetrate into the structure of the tyre) was evaluated. For this purpose the tread was removed and the length of the oxidized portion of the cords of the zero-degree reinforcing strip was measured.

In the comparison tyre, with cords of type A, the oxidation propagated to a length of more than three times that obtained with the tyre according to an embodiment of the present invention, with cords of type C. The Applicant therefore had confirmation, from these tests also, of the great advantages and benefits obtained by the solution according to the present invention.

## Claims

1. A tyre (100) for a wheel of a heavy load vehicle, comprising:
• a carcass structure comprising at least one carcass ply (101);
• a belt structure (105) applied in a radially outer position relative to said carcass structure; and
• a tread band (106) applied in a radially outer position relative to said carcass structure;
wherein said belt structure (105) comprises at least one reinforcing strip (105d) incorporating a plurality of reinforcing elements laid substantially in the circumferential direction;
wherein said reinforcing elements comprise at least one high-elongation metal cord (200);
wherein said metal cord (200) comprises a plurality of twisted strands (201), each strand (201) comprising a central filament (202) and a plurality of outer filaments (203a, ..., 203f) arranged to form a single circular outer ring around said central filament (202); wherein said metal cord (200) comprises a number of strands (201) not greater than three;
wherein said central filament (202) has a diameter greater than the diameter of the outer filaments (203a, ..., 203f);
**characterized in that**
i. said metal cord (200) has an elongation at break of at least 3.5%;
ii. said belt structure (105) comprises at least two radially superposed main belt layers (105a, 105b) incorporating a plurality of reinforcing elements that are substantially parallel to each other in each layer, inclined with respect to the circumferential direction of the tyre (100) and oriented in such a way as to intersect each other with respect to the reinforcing elements of the adjacent layer, wherein said at least one reinforcing strip (105d) is arranged in a position radially external to said at least two main belt layers (105a, 105b);
iii. said at least one reinforcing strip (105d) is arranged at a respective axially outer end of the radially outermost layer of said at least two main belt layers (105a, 105b); and
iv. said belt structure (105) comprises a third belt layer (105c) applied as a radially outermost layer of the belt structure (105) and having reinforcing elements which are laid parallel to each other.

2. The tyre according to claim 1, wherein said at least one high-elongation metal cord (200) has a part load elongation of between 1% and 3%.

3. The tyre (100) according to Claim 1 or 2, wherein said metal cord (200) comprises either five or six outer filaments (203a, ..., 203f).

4. The tyre (100) according to any one of claims 1-3, wherein in said metal cord (200) the diameter of the central filament (202) is greater than the diameter of the plurality of outer filaments (203a, ..., 203f) by a percentage not greater than 25%.

5. The tyre (100) according to Claim 4, wherein the diameter of the central filament (202) is greater than the diameter of the plurality of outer filaments (203a, ..., 203f) by a percentage between substantially 5% and substantially 7% of the diameter of the outer filaments.

6. The tyre (100) according to any one of the preceding claims, wherein said at least one reinforcing strip (105d) is made as a plurality of axially adjacent windings of an elongate element comprising at least one of said reinforcing elements.

7. The tyre (100) according to Claim 6, wherein said elongate element comprises from one to five of said reinforcing elements.

8. The tyre (100) according to any one of Claims 1 to 5, wherein said at least one reinforcing strip (105d) is made as a plurality of radially superposed windings of a rubber-coated band (105d") comprising a plurality of said reinforcing elements.

## Patentansprüche

1. Reifen (100) für ein Rad eines Schwerlastfahrzeugs, der Folgendes umfasst:
• eine Karkassenstruktur, die zumindest eine Karkassenlage (101) umfasst;
• eine Gürtelstruktur (105), die in Bezug auf die Karkassenstruktur in einer radial äußeren Position angelegt ist; und
• einen Laufflächenring (106), der in Bezug auf die Karkassenstruktur in einer radial äußeren Position angelegt ist;
wobei die Gürtelstruktur (105) zumindest einen Verstärkungsstreifen (105d) umfasst, der eine Vielzahl von Verstärkungselementen einbezieht, die im Wesentlichen in der Umtangsrichtung gelegt sind;
wobei die Verstärkungselemente zumindest einen hochdehnbaren Metalldraht (200) umfassen;
wobei der Metalldraht (200) eine Vielzahl von verdrillten Strängen (201) umfasst, wobei jeder Strang (201) ein zentrales Filament (202) und eine Vielzahl von äußeren Filamenten (203a, ..., 203f) umfasst, die so angeordnet sind, dass sie einen einzelnen ringförmigen äußeren Ring um das zentrale Filament (202) bilden;
wobei der Metalldraht (200) eine Anzahl von Strängen (201) nicht größer als drei umfasst; wobei das zentrale Filament (202) einen Durchmesser aufweist, der größer ist als der Durchmesser der äußeren Filamente (203 a, ..., 203f);
**dadurch gekennzeichnet, dass**
i. der Metalldraht (200) eine Bruchdehnung von zumindest 3,5 % aufweist;
ii. die Gürtelstruktur (105) zumindest zwei radial übereinandergelegte Gürtelhauptlagen (105a, 105b) umfasst, die eine Vielzahl von Verstärkungselementen einschließen, die im Wesentlichen in jeder Lage parallel zueinander sind, und in Bezug auf die Umfangsrichtung des Reifens (100) geneigt und auf solche Weise orientiert sind, dass sie einander in Bezug auf die Verstärkungselemente der benachbarten Lage schneiden, wobei der zumindest eine Verstärkungsstreifen (105d) in einer Position radial außerhalb der zumindest zwei Gürtelhauptlagen (105a, 105b) angeordnet ist;
iii. der zumindest eine Verstärkungsstreifen (105d) an einem jeweiligen axial äußeren Ende der radial äußersten Lage von zumindest zwei Gürtelhauptlagen (105a, 105b) angeordnet ist; und
iv. die Gürtelstruktur (105) eine dritte Gürtellage (105c) umfasst, die als eine radial äußerste Lage der Gürtelstruktur (105) aufgebracht ist und Verstärkungselemente aufweist, die parallel zueinander gelegt sind.

2. Reifen nach Anspruch 1, wobei der zumindest eine hochdehnbare Metalldraht (200) eine Teillastdehnung von zwischen 1 % und 3 % aufweist.

3. Reifen (100) nach Anspruch 1 oder 2, wobei der Metalldraht (200) fünf oder sechs äußere Filamente (203a, 203f) aufweist.

4. Reifen (100) nach einem der Ansprüche 1 bis 3, wobei in dem Metalldraht (200) der Durchmesser des zentralen Filaments (202) um einen Prozentsatz von nicht mehr als 25 % größer ist als der Durchmesser der Vielzahl von äußeren Filamenten (203a, ..., 203f).

5. Reifen (100) nach Anspruch 4, wobei der Durchmesser des zentralen Filaments (202) um einen Prozentsatz von zwischen im Wesentlichen 5 % und im Wesentlichen 7 % des Durchmessers der äußeren Filamente größer ist als der Durchmesser der Vielzahl von äußeren Filamenten (203a, ..., 203f).

6. Reifen (100) nach einem der vorhergehenden Ansprüche, wobei der zumindest eine Verstärkungsstreifen (105d) aus einer Vielzahl von axial benachbarten Wicklungen eines länglichen Elements hergestellt ist, das zumindest eines der Verstärkungselemente umfasst.

7. Reifen (100) nach Anspruch 6, wobei das längliche Element ein bis fünf der Verstärkungselemente umfasst.

8. Reifen (100) nach einem der Ansprüche 1 bis 5, wobei der zumindest eine Verstärkungsstreifen (105d) als eine Vielzahl von radial übereinandergelegten Wicklungen eines gummibeschichteten Streifens (105d") hergestellt ist, der eine Vielzahl der Verstärkungselemente umfasst.

## Revendications

1. Pneu (100) pour une roue d'un véhicule de type poids lourd, comprenant :
• une structure de carcasse comprenant au moins un pli de carcasse (101) ;
• une structure de ceinture (105) appliquée dans une position radialement extérieure par rapport à ladite structure de carcasse ; et
• une bande de roulement (106) appliquée dans une position radialement extérieure par rapport à ladite structure de carcasse ;
dans lequel ladite structure de ceinture (105) comprend au moins un ruban de renfort (105d) incorporant une pluralité d'éléments de renfort disposés essentiellement dans la direction circonférentielle ;
dans lequel lesdits éléments de renfort comprennent au moins un fil câblé métallique à allongement élevé (200) ;
dans lequel ledit fil câblé métallique (200) comprend une pluralité de brins torsadés (201), chaque brin (201) comprenant un filament central (202) et une pluralité de filaments extérieurs (203a,..., 203f) agencés pour former un seul anneau extérieur circulaire autour dudit filament central (202) ;
dans lequel ledit fil câblé métallique (200) comprend un certain nombre de brins (201) inférieur ou égal à trois ;
dans lequel ledit filament central (202) a un diamètre supérieur au diamètre des filaments extérieurs (203a,..., 203f) ;
**caractérisé en ce que**
i. ledit fil câblé métallique (200) a un allongement à la rupture d'au moins 3,5% ;
ii. ladite structure de ceinture (105) comprend au moins deux couches de ceinture principale superposées radialement (105a, 105b) incorporant une pluralité d'éléments de renfort qui sont essentiellement parallèles les uns aux autres dans chaque couche, inclinés par rapport à la direction circonférentielle du pneu (100) et orientés de manière à se croiser les uns les autres par rapport aux éléments de renfort de la couche adjacente, où ledit au moins un ruban de renfort (105d) est agencé dans une position radialement externe par rapport auxdites au moins deux couches de ceinture principale (105a, 105b) ;
iii. ledit au moins un ruban de renfort (105d) est agencé au niveau d'une extrémité extérieure axialement respective de la couche la plus extérieure radialement desdites au moins deux couches de ceinture principale (105a, 105b) ; et
iv. ladite structure de ceinture (105) comprend une troisième couche de ceinture (105c) appliquée sous la forme de la couche la plus extérieure radialement de la structure de ceinture (105) et ayant des éléments de renfort qui sont disposés parallèlement les uns aux autres.

2. Pneu selon la revendication 1, dans lequel ledit au moins un fil câblé métallique à allongement élevé (200) a un allongement sous charge partielle compris entre 1% et 3%.

3. Pneu (100) selon la revendication 1 ou 2, dans lequel ledit fil câblé métallique (200) comprend soit cinq ou six filaments extérieurs (203a,..., 203f).

4. Pneu (100) selon l'une quelconque des revendications 1 à 3, dans lequel, dans ledit fil câblé métallique (200), le diamètre du filament central (202) est supérieur au diamètre de la pluralité de filaments extérieurs (203a,..., 203f) d'un pourcentage inférieur ou égal à 25%.

5. Pneu (100) selon la revendication 4, dans lequel le diamètre du filament central (202) est supérieur au diamètre de la pluralité de filaments extérieurs (203a,..., 203f) d'un pourcentage compris entre essentiellement 5% et essentiellement 7% du diamètre des filaments extérieurs.

6. Pneu (100) selon l'une quelconque des revendications précédentes, dans lequel ledit au moins un ruban de renfort (105d) est réalisé sous forme d'une pluralité de spires adjacentes axialement d'un élément allongé comprenant au moins l'un desdits éléments de renfort.

7. Pneu (100) selon la revendication 6, dans lequel ledit élément allongé comprend un à cinq élément(s) parmi lesdits éléments de renfort.

8. Pneu (100) selon l'une quelconque des revendications 1 à 5, dans lequel ledit au moins un ruban de renfort (105d) est réalisé sous forme d'une pluralité de spires superposées radialement d'une bande revêtue de caoutchouc (105d") comprenant une pluralité desdits éléments de renfort.
